# EUROPÄISCHE PATENTSCHRIFT

(11) **EP 3 067 339 B1**
(45) Veröffentlichungstag und Bekanntmachung des Hinweises auf die Patenterteilung: **13.11.2019**
(21) Anmeldenummer: 16159064.1
(22) Anmeldetag: 08.03.2016
(51) Int. Cl.: C04B 35/56, C04B 35/64

(54) **VERFAHREN ZUR HERSTELLUNG DICHTER BAUTEILE AUS ZIRKONCARBID**
METHOD FOR PRODUCING DENSE COMPONENTS MADE OF ZIRCONIUM CARBIDE
PROCEDE DE FABRICATION DE COMPOSANTS DENSE EN CARBURE DE ZIRCONIUM

(30) Priorität: 10.03.2015 DE 102015204269
(43) Veröffentlichungstag der Anmeldung: 14.09.2016
(73) Patentinhaber: Fraunhofer-Gesellschaft zur Förderung der angewandten Forschung e.V., 80686 München (DE)
(72) Erfinder: Schönfeld, Katrin, 01277 Dresden (DE); Martin, Hans-Peter, 01705 Freital (DE)
(74) Vertreter: Pfenning, Meinig & Partner mbB

(56) Entgegenhaltungen:
- EP-A1- 0 695 729
- SACKS M D ET AL: "CARBOTHERMAL REDUCTION SYNTHESIS OF NANOCRYSTALLINE ZIRCONIUM CARBIDE AND HAFNIUM CARBIDE POWDERS USING SOLUTION-DERIVED PRECURSORS", JOURNAL OF MATERIALS SCIENCE, KLUWER ACADEMIC PUBLISHERS, DORDRECHT, Bd. 39, Nr. 19, 1. Oktober 2004 (2004-10-01), Seiten 6057-6066, XP001233434, ISSN: 0022-2461, DOI: 10.1023/B:JMSC.0000041702.76858.A7
- BARNIER P ET AL: "Synthesis and hot-pressing of single-phase ZrCxOy and two-phase ZrCxOy@?ZrO2 materials", INTERNATIONAL JOURNAL OF HIGH TECHNOLOGY CERAMICS, ELSEVIER APPLIED SCIENCE PUBLISHERS, BARKING, GB, Bd. 2, Nr. 4, 1. Januar 1986 (1986-01-01), Seiten 291-307, XP024152271, ISSN: 0267-3762, DOI: 10.1016/0267-3762(86)90022-6 [gefunden am 1986-01-01]
- LANIN A G ET AL: "Non-isothermal sintering parameters and their influence on the structure and properties of zirconium carbide", CERAMICS INTERNATIONAL, ELSEVIER, AMSTERDAM, NL, vol. 17, no. 5, 1 January 1991 (1991-01-01), pages 301-307, XP024157935, ISSN: 0272-8842, DOI: 10.1016/0272-8842(91)90026-V [retrieved on 1991-01-01]

## Beschreibung

Die Erfindung betrifft ein Verfahren zur Herstellung dichter Bauteile aus Zirkoncarbid, die nahezu porenfrei sind, zu mindestens 98 Vol% aus ZrC bestehen und ein feinkörniges Gefüge mit einem d₅₀-Wert < 5 µm aufweisen.

Beim Sintern von reinem ZrC-Pulver ist ein sehr hoher energetischer Aufwand notwendig, da die Sinterung durch Festphasensintern erfolgt und Zirkoncarbid extrem sinterträge ist. Das heißt beim drucklosem Sintern sind bisher Temperaturen > 2100 °C notwendig um dichte Werkstoffe erhalten zu können.

Durch Zusätze von Sinteradditiven sind unter Umständen etwas geringere Temperaturen beim Sintern erforderlich. Additive gehen jedoch zu Lasten der herausragenden Hochtemperatur- und Vakuumstabilität sowie der sehr guten elektrischen und mechanischen Eigenschaften des gesinterten ZrC.

Bei Verwendung von druckunterstützten Sinterverfahren, wie SPS-Sintern und Heißpressen können Verdichtungen des gesinterten ZrC bereits bei etwas niedrigeren Temperaturen erreicht werden. Mit diesen beiden Sinterverfahren können aber nur Bauteile mit begrenzter Geometrie und insbesondere beim SPS-Sintern zu begrenzten Bauteilgrößen hergestellt werden.

Es ist bisher kein Verfahren zur Absenkung der Sintertemperatur beim drucklosen Sintern von reinem, dichten und möglichst porenfreien ZrC bekannt. Und es sind bisher keine ZrC-Werkstoffe mit feinkörnigem Gefüge ohne Additive verfügbar.

So ist von M. Sacks u.a. in "CARBOTHERMAL REDUCTION SYNTHESIS OF NANOCRISTALLINE ZIRCONIUM CARBIDE AND HAFNIUM CARBIDE POWDERS USING SOLUTION-DERIVED PRECURSORS"; Journal of Materials Science; Kluver Academic Publishers; Dordrecht; Bd. 39, Nr. 19. 1.10.2004; S. 6057-6066; XP1233434; ISSN: 0022-2461; DOI: 10.1023/B:JMSC.0000041702.76858.A7 Möglichkeiten für die Synthese von Zirkoniumcarbid beschrieben.

EP 0 695 729 A1 betrifft die Herstellung von hochdichten Zirkuniumcarbidkeramik mit Polymerbindern.

A G. Lanin u.a. beschreiben in "Non-isothermal Sintering Parameters and their Influence on the Structure and Properties of Zirconium Carbide"; Ceramics International; Elsevier; Amsterdam; NL, Bd. 17, Nr. 5; 1.1.1991; S. 301-307; XP024157935; ISSN: 0272-8842; DOI: 10.1016/0272-8842(91)90026-V Sinterprozesse zur Herstellung von Zirkoniumcarbidkörpern.

Bauteile aus Zirkoncarbid sind von A. G. Lanin u.a. in "Non-isothermal sintering parameters and their influence on the structure and properties of zirconium carbide"; Ceramics International; Elsevier;Amsterdam; Bd. 17, Nr. 5; 1.1.1991; s. 301-307; XP024157935 beschrieben.

Es ist daher Aufgabe der Erfindung ein Verfahren anzugeben, mit dem Bauteile aus dichtem ZrC drucklos (bei normalem Umgebungsdruck, ohne zusätzliche Mittel zum Pressen, wie Stempel oder Pressformen) bei reduzierter maximaler Sintertemperatur hergestellt werden können. Weiterhin ist es Aufgabe der Erfindung, einen Zugang zu feinkörnigem, reinem ZrC-Werkstoffen mit hoher mechanischer Festigkeit und hoher Bruchzähigkeit zu erhalten.

Erfindungsgemäß wird diese Aufgabe mit einem Verfahren mit den Merkmalen des Anspruchs 1 gelöst. Vorteilhafte Ausgestaltungen der Erfindung können mit in untergeordneten Ansprüchen bezeichneten Merkmalen erreicht werden.

Bei dem erfindungsgemäßen Verfahren wird ein durch eine Synthese unterstöchiometrisch erhaltenes ZrCₓO_{y}-Pulver zur Herstellung eines Grünkörpers in an sich bekannter Weise, eingesetzt. Dabei liegen die Werte für X zwischen 0,7 und 1 und für Y zwischen 0 und 0,2. Der erhaltene Grünkörper wird dann bei einer Wärmebehandlung mit einer Maximaltemperatur von 2000 °C, bevorzugt maximal 1900 °C gesintert, ohne, dass Druckkräfte auf den Grünkörper ausgeübt werden.

Zur Absenkung der Sintertemperatur sollte ein zweistufiger Prozess erforderlich sein, der eine Umsetzung von ZrO₂ und ZrC zu nichtstöchiometrischen ZrCₓ bzw. ZrCₓO_{y} und eine mechanische Zerkleinerung zu einem sinterbaren Pulver einschließt.

Mit dem Einsatz des unterstöchiometrischen ZrC kann die Sinteraktivität durch Kohlenstoff-Leerstellen im ZrC-Gitter erhöht werden.

Das synthetisierte ZrCₓO_{y} Pulver soll in einem Partikelgrößenbereich von 0,03 µm bis 10 µm eingesetzt werden. Es soll eine mittlere Partikelgröße d₅₀ im Bereich 1 µm bis 2 µm eingehalten sein.

Bei der Wärmebehandlung sollte eine Heizrate von 2 K/min - 20 K/min bei einer Haltezeit von 30 min - 240 min bei der Maximaltemperatur eingehalten werden.

Die hergestellten Bauteile können eine Dichte aufweisen, die mindestens 95 % der theoretischen Dichte entspricht.

Ein hergestelltes Bauteil sollte aus ZrC mit einem maximalen Porenanteil von 5 Vol.-%, einer maximalen Korngröße von 10 µm und einer mittleren Korngröße < 5 µm mit der chemischen Zusammensetzung 89 Masse.-% bis 92 Masse-% Zr und 11 Masse-% bis 6 Masse-% C und 0 Masse.% bis 2 Masse-% O gebildet sein. Weitere als Verunreinigungen zu bezeichnende Komponenten (chemische Elemente und Verbindungen) soll mit maximal 0,2 Masse-% enthalten sein. Der Bauteilwerkstoff sollte einen spezifischen elektrischen Widerstand im Bereich 0,5 ^{∗} 10⁻⁴ Ωcm bis 10 ^{∗} 10⁻⁴ Ωcm sowie eine bei einer Vierpunktmessung bestimmte Biegefestigkeit im Bereich 150 MPa bis 500 MPa aufweisen. Er kann auch eine Bruchzähigkeit von 2,5 MPa^{½} bis 5 MPa^{½} aufweisen.

Bei der Wärmebehandlung verändert sich die Stöchiometrie. Bei steigender Temperatur reduziert sich die Unterstöchiometrie. Sie kann, muss aber nicht die vollständige Stöchiometrie von ZrC bei der Maximaltemperatur erreichen. Das Sintern sollte in einer inerten Atmosphäre, insbesondere Argon durchgeführt werden.

Bei der Erfindung kann die erforderliche Aktivierungsenergie für das Festphasensintern herabgesetzt werden, so dass schon bei niedrigeren Temperaturen dichte gesinterte Bauteile hergestellt werden können. Die so hergestellten Bauteile erreichen infolge des Herstellungsverfahrens die thermodynamisch stabile Stöchiometrie von ZrC und vermeiden bisher bei den bekannten Verfahren auftretendes Riesenkornwachstum (maximale Korngröße der Körner ≤ 5.um) oder die Einbindung sekundärer Phasen, die zu Absenkung der Hochtemperaturbeständigkeit führen. Mit dem hergestellten ZrC-Bauteilen können die Vorteile des Werkstoffs ZrC (kombinierte Hochtemperatur + Hochvakuumbeständigkeit, Hochtemperaturbeständigkeit unter Wasserstoffatmosphäre, hohe elektrische Leitfähigkeit) nahezu uneingeschränkt in Bauteile überführt werden.

Bisher sind keine alternativen Wege zur Herstellung gleichwertiger ZrC-Sinterkörper mit einer dazu wettbewerbsfähigen Technologie bekannt.

Es kann ein typisches Sintergefüge ausgebildet werden, das stöchiometrische ZrC-Körner (XRD-Nachweis), begrenzte Korngrößen (< 5 µm) und die Abwesenheit von Sekundärphasen aufweist. Je nach Herstellungsbedingungen können geringfügige Reste von ZrO₂ oder C mit max. 2 Vol.-% im Bauteilwerkstoff enthalten sein. Daraus resultieren herausragende Eigenschaften, wie Hochtemperaturbeständigkeit, definierte elektrische Leitfähigkeit, chemische Stabilität. Es kann nach der zur Sinterung führenden Wärmebehandlung ein Bauteil erhalten werden, das aus unterstöchiometrischem ZrCₓO_{y} bzw. ZrCx gebildet ist.

Es können Bauteile für den Maschinenbau, Heizelemente für Hochtemperaturöfen, Brennhilfsmittel in Hochtemperaturöfen, Bauteile für Beschichtungsanlagen für die Mikroelektronik, LED und OLED-Fertigung hergestellt werden, die in ihrer Gestaltung und Dimensionierung nahezu nicht eingeschränkt sind.

Die hergestellte Bauteile können als Ersatzwerkstoff für Wolfram und Molybdän durch gleichwertige bzw. überlegene technische Eigenschaften dienen. Außerdem sind sie kostengünstiger in der Herstellung und beim Einsatz.

Die hergestellten Bauteile unterscheiden sich von mittels SPS gesinterten oder durch Heißpressen hergestellten Bauteilen insbesondere dadurch, dass das Gefüge eine relativ breite Korngrößenverteilung aufweist. Außerdem werden Bauteile mit den verschiedensten Geometrien und Dimensionierungen, als auch gekrümmte Formen, wie sie mit den anderen nicht druckunterstützten Sinterverfahren herstellbar sind, hergestellt.

Nachfolgend soll die Erfindung beispielhaft näher erläutert werden.

### Beispiel 1

Zur Herstellung der Bauteile wurden in einem ersten Schritt 500 g eines ZrO2-Pulvers mit 150 g Graphit in einer Kugelmühle 6 h gemischt. Die Pulvermischung wird in einem Hochtemperaturofen unter Argon auf 1700 °C aufgeheizt und für 2 h bei der Maximaltemperatur gehalten. Anschließend wurde die Pulvermischung abgekühlt. Das erhaltene Syntheseprodukt ist ein ZrCx Pulver, das erneut in einer Kugelmühle aufgemahlen wurde. Die erneut aufgemahlene Pulvermischung wurde mit einem Presshilfsmittel (Stearatwachs) zu einer Pulversuspension verarbeitet und mittels Sprühgranulierung getrocknet und granuliert. Das dafür eingesetzte Pulver bestand aus unterstöchiometrischem ZrCxOy mit X = 0,89 und Y = 0,11.

Das Sprühgranulat wurde in einer uniaxialen Presse zu Platten mit den Abmessungen 60 mm x 60 mm x 8 mm mit 30 MPa Pressdruck verpresst. Anschließend wurden die erhaltenen Platten isostatisch mit einem Druck von 300 MPa nachverdichtet. Die Platten wurden bei 600 °C unter Stickstoffatmosphäre einer Pyrolyse des Binders und Presshilfsmittels unterzogen. Anschließend wurden die Platten in einem Hochtemperaturofen mit Graphitheizer auf 2000 °C mit einer Aufheizrate von 5 K/min unter Argon aufgeheizt und 2 h bei der Maximaltemperatur gehalten. Anschließend wurde der Ofen abgekühlt. Die gesinterten Platten erreichen eine Dichte, die 98 % der theoretischen Dichte von ZrC entspricht, wobei eine Volumenschwindung von 39 % aufgetreten ist. Der spezifische elektrische Widerstand liegt bei 1 ^{∗} 10-4 Wcm. Der Vakuumdampfdruck bei 2000 °C entspricht dem von Wolframwerkstoffen. Das Gefüge ist durch einen Porenanteil < 1 Vol.-% und einer mittleren Korngröße < 3 µm gekennzeichnet. Der Werkstoff erreicht eine Biegebruchfestigkeit von 300 MPa sowie einen Klc-Wert von 3,6 MPa½.

### Beispiel 2

Zur Herstellung von Bauteilen wurden in einem ersten Schritt 500 g eines ZrO2-Pulvers mit 120 g Graphit in einer Kugelmühle 6 h gemischt. Die Pulvermischung wurde in einem Hochtemperaturofen unter Argon auf 1700 °C aufgeheizt und für 2 h bei der Maximaltemperatur gehalten. Anschließend wurde die Pulvermischung abgekühlt. Das erhaltene Syntheseprodukt war ein ZrCxOy Pulver mit X = 0,9 und Y = 0,1, das erneut in einer Kugelmühle mit Graphit aufgemahlen und homogenisiert wurde. Dabei wurde nur soviel Graphit dem Synthesepulver zugefügt, wie zur vollständigen Umsetzung zum ZrC benötigt worden ist. Zur Ermittlung der benötigten C-Menge wird mittels XRD Analyse und chemischer Sauerstoffbestimmung der x-Wert und der y-Wert obiger Verbindung ZrCxOy bestimmt. Die erhaltene Pulvermischung wurde mit einem Presshilfsmittel (Stearatwachs) zu einer Pulversuspension verarbeitet und mittels Sprühgranulierung getrocknet und granuliert.
Das Sprühgranulat wurde in einer uniaxialen Presse zu Platten mit den Abmessungen 60 mm x 60 mm x 8 mm mit 30 MPa Pressdruck verpresst. Anschließend wurden die erhaltenen Platten isostatisch mit einem Druck von 300 MPa nachverdichtet. Die Platten wurden bei 600 °C unter Stickstoff einer Pyrolyse zur Entfernung des Binders und Presshilfsmittels unterzogen. Anschließend wurden die Platten in einem Hochtemperaturofen mit Graphitheizer auf 2000 °C mit einer Aufheizrate von 5 K/min unter Argon aufgeheizt und 2 h bei der Maximaltemperatur gehalten. Anschließend wurde der Ofen abgekühlt. Die gesinterten Platten erreichen eine Dichte von 96% der theoretischen Dichte von ZrC, wobei eine Volumenschwindung von 35 % aufgetreten ist. Ihr spezifischer elektrischer Widerstand liegt bei 1,5^{∗} 10-4 Wcm. Der Vakuumdampfdruck bei 2000 °C entspricht dem von Wolframwerkstoffen. Das Gefüge ist durch einen Porenanteil < 2 Vol.-% und einer mittleren Korngröße < 3 µm gekennzeichnet. Der Werkstoff erreicht eine Biegebruchfestigkeit von 280 MPa sowie einen Klc-Wert von 3,5 MPa.

## Patentansprüche

1. Verfahren zur Herstellung gesinterter Bauteile aus Zirkoncarbid, bei dem ein Grünköper mit einem unterstöchiometrischen ZrCₓO_{y} Pulver, bei dem X = 0,7 bis 1,0 und Y = 0,0 bis 0,2 sind hergestellt und anschließend bei Wärmebehandlung mit einer Maximaltemperatur von 2000 °C drucklos gesintert wird,
**dadurch gekennzeichnet, dass**
dass ein synthetisiertes ZrCₓO_{y}-Pulver mit einem Partikelgrößenbereich von 0,03 µm bis 10 µm und einer mittleren Partikelgröße d₅₀ im Bereich 1µm bis 2 µm eingesetzt wird wobei
keine Additive außer als Verunreinigungen zu bezeichnende Komponenten, wie chemische Elemente und Verbindungen mit maximal 0,2 Masse-% enthalten sind und dabei das Zirkoncarbid eine relativ breite Korngrößenverteilung aufweist und
Bauteile mit verschiedensten Geometrien und Dimensionierungen hergestellt werden.

2. Verfahren nach Anspruch 1, **dadurch gekennzeichnet, dass** eine Maximaltemperatur von 1900 °C bei der Wärmebehandlung eingehalten wird.

3. Verfahren nach einem der vorhergehenden Ansprüche, **dadurch gekennzeichnet, dass** bei der zur Sinterung führenden Wärmebehandlung eine Heizrate im Bereich 2 K/min bis 20 K/min und/oder eine Haltezeit im Bereich zwischen 30 min und 240 min bei der Maximaltemperatur eingehalten wird.

4. Verfahren nach dem vorhergehenden Anspruch, **dadurch gekennzeichnet, dass** eine Heizrate von 5 K/min und eine Haltezeit von 120 min eingehalten wird.

5. Verfahren nach einem der vorhergehenden Ansprüche, **dadurch gekennzeichnet, dass** die Wärmebehandlung in einer inerten Atmosphäre durchgeführt wird.

## Claims

1. Process for producing sintered components composed of zirconium carbide, in which a green body comprising a substoichiometric ZrCₓO_{y} powder, where X = 0.7 to 1.0 and Y = 0.0 to 0.2, is produced and subsequently sintered at atmospheric pressure in a heat treatment with a maximum temperature of 2000°C,
**characterized in that**
a synthetic ZrC_{X}O_{Y} powder having a particle size range from 0.03 µm to 10 µm and an average particle size d₅₀ in the range from 1 µm to 2 µm is used and
no additives apart from components which may be considered to be impurities, for example chemical elements and compounds, are present in a maximum amount of 0.2% by mass and the zirconium carbide has a relatively broad particle size distribution and
components having a variety of geometries and dimensions are produced.

2. Process according to Claim 1, **characterized in that** a maximum temperature of 1900°C is adhered to in the heat treatment.

3. Process according to any of the preceding claims, **characterized in that** a heating rate in the range from 2 K/min to 20 K/min and/or a hold time in the range from 30 min to 240 min at the maximum temperature is adhered to in the heat treatment leading to sintering.

4. Process according to the preceding claim, **characterized in that** a heating rate of 5 K/min and a hold time of 120 min are adhered to.

5. Process according to any of the preceding claims, **characterized in that** the heat treatment is carried out in an inert atmosphere.

## Revendications

1. Procédé de fabrication de pièces frittées en carbure de zirconium, dans lequel on fabrique un produit vert à l'aide d'une poudre sous-stœchiométrique de ZrCₓO_{y}, dans laquelle X = 0,7 à 1,0 et Y = 0,0 à 0,2, puis on fritte sans pression en présence d'un traitement thermique, à une température maximale de 2000 °C,
**caractérisé en ce que**
on utilise une poudre de ZrCₓO_{Y} synthétique présentant un intervalle granulométrique de 0,03 µm à 10 µm et une granulométrie moyenne d₅₀ comprise dans la plage de 1 µm à 2 µm,
ne contenant aucun additif autre que les composants qu'il convient de désigner comme étant des impuretés, tels que les éléments et composés chimiques, en une quantité maximale de 0,2 % en masse, le carbure de silicium présentant alors une distribution granulométrique relativement large, et
on fabrique des composants ayant les géométries et les dimensionnements les plus divers.

2. Procédé selon la revendication 1, **caractérisé en ce qu'**on maintient lors du traitement thermique une température maximale de 1900 °C.

3. Procédé selon l'une des revendications précédentes, **caractérisé en ce que**, lors du traitement thermique conduisant au frittage, on maintient une vitesse de montée en température dans la plage de 2 K/min à 20 K/min et/ou un temps de maintien compris dans la plage entre 30 min et 240 min à la température maximale.

4. Procédé selon la revendication précédente, **caractérisé en ce qu'**on maintient une vitesse de montée en température de 5 K/min et un temps de maintien de 120 min.

5. Procédé selon l'une des revendications précédentes, **caractérisé en ce que** le traitement thermique est effectué sous une atmosphère inerte.
